# EUROPÄISCHE PATENTSCHRIFT

(11) **EP 3 259 110 B1**
(45) Veröffentlichungstag und Bekanntmachung des Hinweises auf die Patenterteilung: **29.01.2020**
(21) Anmeldenummer: 16705485.7
(22) Anmeldetag: 16.02.2016
(51) Int. Cl.: B29C 49/20, B29C 49/22, B29C 49/42, B29C 48/00, B29C 49/04, B29K 23/00, B29L 31/00

(54) **VERFAHREN ZUM EXTRUSIONSBLASFORMEN EINES BEHÄLTERS AUS THERMOPLASTISCHEM KUNSTSTOFF SOWIE EXTRUSIONSBLASGEFORMTER BEHÄLTER**
METHOD FOR THE EXTRUSION BLOW MOULDING OF A CONTAINER OF THERMOPLASTIC MATERIAL AND EXTRUSION BLOW-MOULDED CONTAINER
PROCÉDÉ DE FORMAGE PAR EXTRUSION-SOUFFLAGE D'UN RÉCIPIENT EN MATIÈRE SYNTHÉTIQUE THERMOPLASTIQUE ET RÉCIPIENT FORMÉ PAR EXTRUSION-SOUFFLAGE

(30) Priorität: 18.02.2015 DE 102015202940
(43) Veröffentlichungstag der Anmeldung: 27.12.2017
(73) Patentinhaber: Kautex Textron GmbH & Co. KG, 53229 Bonn (DE)
(72) Erfinder: SCHMITZ, Dieter, 53227 Bonn (DE)
(74) Vertreter: Richly & Ritschel Patentanwälte PartG mbB
(86) Internationale Anmeldenummer: PCT/EP2016/053284
(87) Internationale Veröffentlichungsnummer: WO 2016/131835

(56) Entgegenhaltungen:
- DE-A1- 2 210 693
- DE-A1- 2 825 097
- DE-A1- 4 205 332
- DE-A1-102009 049 948
- JP-A- H09 290 814
- US-A1- 2009 101 642
- US-B1- 6 626 325

## Beschreibung

Die Erfindung betrifft ein Verfahren zum Extrusionsblasformen eines Behälters aus thermoplastischem Kunststoff mit wenigstens einer Durchführung durch eine Wand des Behälters sowie einen extrusionsblasgeformten Behälter aus thermoplastischem Kunststoff, vorzugsweise hergestellt nach dem Verfahren gemäß der Erfindung.

Extrusionsblasgeformte Behälter aus thermoplastischem Kunststoff im Sinne der Erfindung sind insbesondere aber nicht ausschließlich Kraftstoffbehälter für Kraftfahrzeuge, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet.

Bei der Herstellung von Großgebinden wie Fässern oder IBCs (Intermediate Bulk Container) ist es grundsätzlich bekannt, Griffelemente, Gewindeeinsätze oder andere Zubehörteile während der Herstellung der Behälter an diesem zu befestigen. Bekanntlich ist HDPE ein thermoplastischer Kunststoff, der bei andauernder Druckbelastung wieder plastisch wird und zum Kriechen neigt. Grundsätzlich besteht daher das Bedürfnis, bestimmte stark belastete Zubehörteile oder andere Teile wie Griffelemente oder Befestigungsaugen aus einem hochfesten thermoplastischen Kunststoff herzustellen. Solche Anbauteile werden häufig durch Spritzgießen von gefülltem thermoplastischem Kunststoff hergestellt und dann bei der Herstellung des extrusionsblasgeformten Behälters "umblasen". Das bedeutet, dass die betreffenden Teile als Einlegeteile in das Werkzeug bzw. in die Kavität des Blasformwerkzeugs eingelegt werden. Beim Ausformen des Behälterkörpers aus HDPE verbindet sich der Behälterkörper mit den Einlegeteilen entweder stoffschlüssig oder formschlüssig.

Das Extrusionsblasformen ist grundsätzlich mit dem Nachteil behaftet, dass Bauteile mit starken Hinterschneidungen nicht oder nicht ohne Weiteres aus dem Blasformwerkzeug entformbar sind, weswegen die Verwendung von Einlegeteilen in Blasformwerkzeugen eine verhältnismäßig lange Tradition hat.

Ein Verfahren zur Herstellung eines Behälters durch Extrusionsblasformen unter Verwendung von Einlegeteilen im Blasformwerkzeug ist beispielsweise in der US 6,262,325 B1 beschrieben. Dort werden die Einlegeteile zur Bildung von Befestigungsaugen und Gewindesacklöchern am Behälter verwendet.

Was die Platzierung von Öffnungen und Durchführungen an extrusionsblasgeformten Behältern anbelangt, so hat sich beim konventionellen Extrusionsblasformen, d. h. beim Extrusionsblasformen von schlauchförmigen Vorformlingen, durchgesetzt, solche Öffnungen im Bereich der Teilungsebene des Blasformwerkzeugs vorzusehen, möglichst dort, wo ein Blasdorn in den innerhalb des Formnestes des Blasformwerkzeuges angeordneten Vorformling eingeschossen wird. Eine ggf. mittels eines Blasdorns kalibrierte Öffnung wird dann später ausgekreist. So beschreibt die US 6,262,325 B1 einen solchen Behälter, bei welchem die Ausgussöffnung in der zuvor beschriebenen Art und Weise hergestellt wurde.

Beispielsweise bei Kraftstoffbehältern für Kfz ist es unter Umständen erforderlich, mehrere Öffnungen in der Behälterwand vorzusehen, beispielsweise zum Hindurchführen von Be- und Entlüftungsanschlüssen bzw. zum Hindurchführen von Anschlussnippeln für Be- und Entlüftungsleitungen oder auch für Kraftstoffleitungen.

Bei solchen Behältern werden üblicherweise nach Fertigstellung Öffnungen in der Behälterwand ausgekreist, in die Öffnungen werden dann Nippel und/oder Ventile eingesetzt und mit der Behälterwand verschweißt oder verklebt. Auch ist es bekannt, zweiteilige Anschlusselemente vorzusehen, die ggf. unter Zwischenlage von elastischen Dichtmitteln gegen die Behälterwand abgedichtet werden.

Da moderne Kraftstoffbehälter teilweise aus mehrlagig coextrudierten Kunststoffen bestehen und in deren Wandung Barriereschichten für Kohlenwasserstoffe eingebettet sind, erfordert das nachträgliche Einbringen von Öffnungen in die Behälterwand ein Verletzen der Barriereschichten, sodass im Bereich der Verschweißung von Anschlussstücken und Nippeln mit der Behälterwand potentielle Leckagepfade geschaffen werden.

Es sind zahlreiche Gestaltungsvorschläge und Verfahrensvarianten bekannt, bei welchen es darum geht, Durchführungen, insbesondere Leitungsdurchführungen durch die Behälterwand vorzusehen, die eine möglichst hohe Diffusionsdichtigkeit für flüchtige Kohlenwasserstoffe aufweisen

So ist beispielsweise aus der EP 2 777 910 A1 ein Verfahren zur Herstellung eines extrusionsblasgeformten Kraftstoffbehälters bekannt, bei dem beim Ausformen der Behälterwand in der Behälterwand eine werkzeugseitig vorstehende Ausstülpung erzeugt wird. Von innen wird ein Anschlussprofil eines Nippels in diese Ausstülpung eingesetzt, sodann wird im Blasformwerkzeug der Vorformling im Bereich der Ausstülpung mittels mehrerer im Blasformwerkzeug angeordneter Schieber so eingeschnürt, dass er gegen das äußere Profil des Nippels anliegt und mit diesem eine formschlüssige und stoffschlüssige Verbindung eingeht. Der Nippel ist in diesem Bereich mit einem entsprechenden Rippenprofil versehen. Darüber hinaus wird der Nippel beim Zufahren der Schieber mit dem Vorformling verschweißt. Nach Entnahme des Behälters aus dem Blasformwerkzeug wird die Behälterwand im Bereich der Ausstülpung aufgeschnitten, sodass der Nippel von außen anschließbar ist.

Das Verfahren gemäß EP 2 777 910 A1 erfordert zwingend, dass der Nippel bzw. Anschlussstutzen innerhalb des Formnestes von innen in die Ausstülpung des Vorformlings eingesetzt wird. Eine solche Manipulation ist bei herkömmlichem Extrusionsblasformen aus einem schlauchförmigen Vorformling, wenn überhaupt, nur äußerst aufwendig durchführbar.

Das Verfahren gemäß EP 2 777 910 A1 ist daher im Wesentlichen auf das sogenannte "Twin Sheet Blowmolding"-Verfahren beschränkt, bei welchem der schlauchförmige Vorformling in zwei bahnförmige Lappen aufgetrennt wird, die dann innerhalb des Blasformwerkzeugs an die Kavitäten der Blasformhälften angelegt werden. Bei diesem Verfahren sind die Vorformlinge formnestseitig zeitweise zugänglich.

Darüber hinaus erfordert dieses Verfahren eine verhältnismäßig aufwendige Schiebertechnik im Blasformwerkzeug.

Aus der US 5,103 865 ist ein Verfahren bekannt, bei welchem eine Öffnung in einer Wand des Behälters mittels eines Einlegeteils erzeugt wird, welches eine Nadelspitze aufweist, die die Wand des Behälters bei der Ausformung innerhalb des Formnests durchdringt. Das Einlegeteil ist als Ventilgehäuse für ein Entlüftungsventil ausgebildet und dessen in das Behältervolumen eintauchende Teil ist hinsichtlich der Notwendigkeit, die Wand des Behälters durchstoßen zu müssen, optimiert. So ist es bei einem solchen Einlegeteil nicht möglich, eine im Wesentlichen stirnseitig offene und zylindrische Durchführung zu erzeugen, da das Einlegeteil zunächst einmal das durchstoßene Material des Vorformlings verdrängen muss.

Aus der US 2009/101642 A1 ist ein Verfahren gemäß Oberbegriff von Anspruch 1 sowie ein Behälter gemäß Oberbegriff von Anspruch 9 bekannt.

Weiterer Stand der Technik ist den Dokumenten DE 22 10 693 A1 und DE 28 25 097 A1 zu entnehmen. Dokument DE10-2009-049948A1 beschreibt einen extrusionsblasgeformten Behälter gemäß dem Oberbegriff des Anspruchs 9.

Der Erfindung liegt daher die Aufgabe zugrunde, ein besonders einfaches Verfahren zum Extrusionsblasformen eines Behälters aus thermoplastischem Kunststoff mit wenigstens einer Durchführung durch eine Wand des Behälters bereitzustellen, welches insbesondere auch als konventionelles Extrusionsblasformverfahren unter Verwendung eines schlauchförmigen Vorformlings durchführbar ist.

Die Aufgabe wird zunächst gelöst durch ein Verfahren gemäß Anspruch 1.

Unter "formnestseitig" im Sinne der vorliegenden Erfindung ist diejenige Seite der Wand des Behälters zu verstehen, welche dem Inneren des Formnests zugekehrt ist, wohingegen unter "werkzeugseitig" im Sinne der vorliegenden Erfindung diejenige Seite der Wand des Behälters oder des Vorformlings zu verstehen ist, die der Kavität des Blasformwerkzeugs zugekehrt ist bzw. die beim Ausformen gegen eine Fläche des Blasformwerkzeugs anliegt.

Eine Durchführung im Sinne dieser Erfindung ist eine durchgängige Öffnung in der Wand des Behälters, über die eine Fluidkommunikation mit einem von dem Behälter umschlossenen Volumen herstellbar ist. Die Durchführung kann in Form eines zylindrischen Kanals ausgebildet sein, der beidseitig geöffnet ist. Der Kanal kann eine innere glattwandige oder profilierte Mantelfläche aufweisen.

Das Verfahren gemäß der vorliegenden Erfindung ist insbesondere als Extrusionsblasformverfahren im herkömmlichen Sinne vorgesehen, d. h. dass das Verfahren das Extrudieren und Bereitstellen eines schlauchförmigen Vorformlings aus plastifiziertem thermoplastischem Kunststoff umfasst.

Bei dem Verfahren kann vorgesehen sein, einen schlauchförmigen Vorformling aus plastifiziertem thermoplastischem Kunststoff oberhalb eines zunächst geöffneten, zweiteiligen Blasformwerkzeugs in Schwerkraftrichtung zu extrudieren. Unter einem zweiteiligen Blasformwerkzeug ist im Wesentlichen ein Blasformwerkzeug mit zwei Blasformhälften zu verstehen, die in bekannter Art und Weise an Formaufspannplatten eines Schließgestells angeordnet sind.

Jede der Formhälften kann eine Kavität aufweisen, wobei die Kavitäten der Formhälften bei dem geschlossenen Blasformwerkzeug ein Formnest definieren, das der Außenkontur des zu fertigenden Behälters entspricht.

Jede der Formhälften kann in sich mehrere Teile, insbesondere auch Schieber oder dergleichen aufweisen.

In wenigstens einer der Kavitäten kann wenigstens eine Ausnehmung zur Aufnahme des Einlegeteils gemäß der Erfindung vorgesehen sein.

Ein Einlegeteil im Sinne der vorliegenden Erfindung kann im einfachsten Fall eine Hülse, Buchse oder dergleichen sein. Das Einlegeteil kann allerdings auch eine kompliziertere Gestaltung, beispielsweise in Form eines Nippels mit wenigstens einem Aufsteckprofil aufweisen.

Bei dem Verfahren gemäß der Erfindung umschließt der Vorformling das Einlegeteil formnestseitig vorzugsweise so, dass der Vorformling bzw. die spätere Wand des Behälters aus thermoplastischem Kunststoff zunächst die von dem Einlegeteil definierte vorzugsweise zylindrische Durchführung formnestseitig nach Art eines Sacklochs verschließt, wobei dieser Teil der Wand des Behälters mittels eines weiteren Werkzeugs von außen geöffnet wird. Von außen bedeutet in diesem Zusammenhang entweder nach Entnahme des Behälters aus dem Blasformwerkzeug oder innerhalb des Blasformwerkzeugs formnestseitig, d. h. beispielsweise mittels eines in den Vorformling eingeschossenen Blasdorns.

Das Verfahren gemäß der Erfindung hat den Vorzug, dass dieses im Vergleich zu den bekannten Verfahren verhältnismäßig einfach durchführbar ist und dass mittels des Einlegeteils eine maßhaltige und bereits kalibrierte Öffnung in der Wand des Behälters bereitgestellt wird.

Wie eingangs bereits erwähnt, kann das Einlegeteil als einfache Buchse ausgebildet sein, in die beispielsweise ein Anschlussstutzen, ein Nippel, ein Ventil oder ein Befestigungselement für ein Einbauteil, beispielsweise für ein Schwallwandelement abgedichtet einsetzbar ist, alternativ kann das Einlegeteile beispielsweise auf der Außenseite, d. h. werkzeugseitig als Nippel mit einem Anschlussprofil ausgebildet sein. Schließlich ist es möglich, dass Einlegeteil auch als sogenannten Doppelnippel mit zwei Anschlussprofilen, beispielsweise in Form von Tannenbaumprofilen auszubilden.

Bevorzugt wird das Einlegeteil in eine hierfür vorgesehene Ausnehmung in eine Kavität des Blasformwerkzeugs eingesetzt. Dabei wird das Einlegeteil bevorzugt vor dem Einsetzen in die Ausnehmung der Kavität des Blasformwerkzeugs erwärmt bzw. vorgewärmt, beispielsweise mittels eines Infrarotheizstrahlers. Sodann erfolgt das Einbringen des Vorformlings aus thermoplastischem Kunststoff in das Blasformwerkzeug. Durch das Vorwärmen oder Vorheizen des Einlegeteils wird die Verschweißbarkeit des Einlegeteils mit dem noch warmplastischen Vorformling verbessert.

Bei einer bevorzugten Variante des Verfahrens gemäß der Erfindung umfasst das Einlegeteil einen ersten und einen zweiten thermoplastischen Kunststoff, wobei der erste thermoplastische Kunststoff mit dem thermoplastischen Kunststoff der Wand des Behälters im Sinne einer Verschweißbarkeit kompatibel ist. Das Einlegeteil kann beispielsweise als sogenanntes Mehr-Komponenten-Spritzgußteil ausgebildet sein und beispielsweise einen Stützkörper aus Polyamid und wenigstens eine Außenschicht aus LDPE oder HDPE aufweisen. Der Stützkörper verleiht dem Einlegeteil die entsprechende Festigkeit und Maßhaltigkeit.

Der zweite thermoplastische Kunststoff des Einlegeteils kann beispielsweise so beschaffen sein, dass er nicht mit der Wand des Behälters verschweißbar ist.

Unter einer Verschweißung im Sinne der vorliegenden Erfindung ist die gegenseitige molekulare Durchdringung der miteinander zu verschweißenden Elemente zu verstehen, die durch Druck und Temperatur erzielt wird, wobei die zu verschweißenden Kunststoffe von ähnlicher molekularer Beschaffenheit sein müssen, um eine solche Verschweißbarkeit zu gewährleisten. Beispielsweise sind Polyolefine in der Regel miteinander verschweißbar, wohingegen Polyolefine und Polyamide in der Regel nicht miteinander verschweißbar sind.

Das Öffnen der Behälterwand bzw. der Durchführung nach dem Entnehmen des Behälters aus dem Blasformwerkzeug kann beispielsweise mittels eines heißen Dorns erfolgen, was den Vorzug hat, dass etwa aus der Behälterwand entferntes Material nicht im Volumen des Behälters vagabundiert.

Alternativ kann vorgesehen sein, die Öffnung in der Wand des Behälters auszufräsen oder auszukreisen.

Bei einer zweckmäßigen Variante des Verfahrens gemäß der Erfindung ist vorgesehen, dass als Einlegeteil eine Buchse mit einem umlaufenden Kragen Anwendung findet, wobei der Kragen eine Mündung der Durchführung umschließt bzw. begrenzt.

Besonders vorteilhaft ist es, wenn der Kragen eine Breite aufweist, die wenigstens der Tiefe der Durchführung entspricht. Ein verhältnismäßig breit bemessener Kragen hat insbesondere den Vorteil, dass der Kragen eine vergrößerte Anschweißfläche bietet. Je großflächiger der Kragen mit der Wand des Behälters verschweißt ist, desto länger ist der potentielle Diffusionspfad für Kohlenwasserstoff, wenn beispielsweise der Behälter als Kraftstoffbehälter ausgebildet sein soll.

Vorzugsweise ist der Kragen an der dem Formnest zugekehrten Seite der Durchführung vorgesehen.

Beispielsweise kann der Kragen eine einer Behälterinnenseite zugekehrten Mündung der Durchführung umschließen und in Richtung auf die Behälteraußenseite abgewinkelt sein, sodass das Einlegeteil in der Wand des Behälters auf der Behälteraußenseite eine Mulde bildet. Auf diese Art und Weise wird die Kontaktfläche zwischen dem Einlegeteil und der Wand des Behälters vergrößert, wodurch sich auch ein potentieller Leckagepfad verlängert. Darüber hinaus lässt sich auf diese Art und Weise auch ein Anschluss an die Durchführung in die Behälteraußenfläche einziehen, was unter Umständen im Hinblick auf die Einbausituation des Behälters beispielsweise in einem Kraftfahrzeug vorteilhaft sein kann. Die Erfindung betrifft weiterhin einen extrusionsblasgeformten Behälter gemäß Anspruch 9. Der erste thermoplastische Kunststoff ist vorzugsweise verschieden von dem zweiten thermoplastischen Kunststoff.

Das Einlegeteil kann beispielsweise als zylindrische Hülse mit einem umlaufenden Kragen vorgesehen sein, der behälterinnenseitig und/oder behälteraußenseitig eine Mündung der Durchführung umgeben kann.

Bei einer Variante des Behälters gemäß der Erfindung ist vorgesehen, dass der Kragen eine einer Behälterinnenseite der Durchführung zugekehrte Mündung umschließt und in Richtung die Behälteraußenseite abgewinkelt ist, sodass das Einlegeteil auf der Behälteraußenseite eine vorzugsweise trichterförmige Mulde bildet.

Selbstverständlich kann der Kragen auch eine einer Behälteraußenseite zugekehrten Mündung der Durchführung umschließen und sich beispielsweise ohne Überstand in die Außenseite der Behälterwand einfügen.

Bei einer Variante des extrusionsblasgeformten Behälters gemäß der Erfindung ist die Durchführung durch eine glattwandige innere Mantelfläche begrenzt.

Das Einlegeteil kann beispielsweise als Buchse oder Hülse ausgebildet sein, die sowohl außenseitig als auch innnenseitig ein HDPE aufweist und die einen Stützkörper aus Polyamid umfasst.

Bei einer weiteren Variante des extrusionsblasgeformten Behälters gemäß der Erfindung kann das Einlegeteil als Hülse oder Buchse ausgebildet sein, die außenseitig ein HDPE umfasst und innenseitig eine Mantelfläche aus einem LDPE, beispielsweise einem maleinsäureanhydrid-modifiziertem LDPE aufweist. Die LDPE-Mantelfläche auf der Innenseite der Durchführung kann dabei beispielsweise als Haftvermittlerschicht für einen in die Durchführung einzuschweißenden Anschlussstutzen ausgebildet sein.

Bei einer Variante des Behälters gemäß der Erfindung ist vorgesehen, dass der Kragen vollflächig mit der Wand des Behälters verschweißt ist und dass die Breite des Kragens wenigstens so groß wie die Tiefe der Durchführung ist.

Zweckmäßigerweise entspricht die Tiefe der Mulde wenigstens der Tiefe der Durchführung, sodass die behälteraußenseitige Mündung der Durchführung wenigstens mit der äußeren Wand des Behälters fluchtet.

Die Durchführung kann beispielsweise einen Anschlussstutzen oder einen Nippel aufweisen, der entweder eingeschweißt ist oder mittels O-Ring-Dichtungen in der Durchführung abgedichtet ist.

Der extrusionsblasgeformte Behälter der vorstehend beschriebenen Art wurde vorzugsweise nach dem Verfahren der Erfindung erhalten.

Die Erfindung wird nachstehend anhand eines in den Zeichnungen dargestellten Ausführungsbeispiels erläutert.

Es zeigen:
- Figur 1: einen Teilschnitt durch die Wand eines extrusionsblasgeformten Behälters gemäß der Erfindung nach einer ersten Variante und
- Figur 2: einen Schnitt durch die Wand eines extrusionsblasgeformten Behälters gemäß der Erfindung bevor die Öffnung in der Wand des Behälters mittels eines Werkzeugs von außen geöffnet wurde, d. h. unmittelbar nach der Entnahme des Behälters aus einem Blasformwerkzeug.

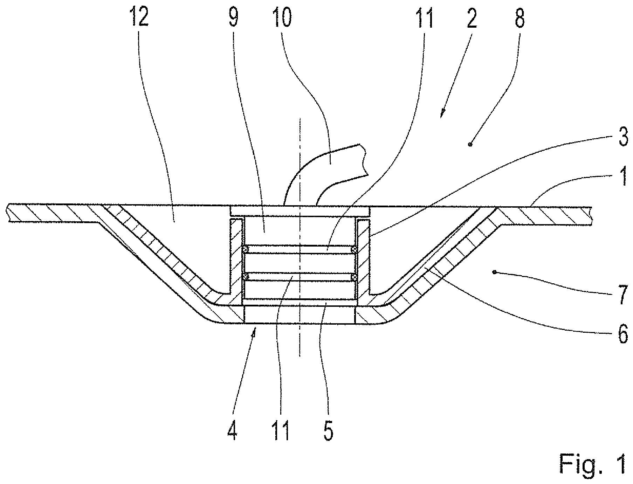

In Figur 1 ist aus Vereinfachungsgründen nur ein Teil einer Wand 1 eines Behälters 2 gemäß der Erfindung dargestellt.

Der Behälter 2 wird durch Extrusionsblasformen aus thermoplastischem Kunststoff hergestellt. Hierzu kann beispielsweise mittels eines nicht gezeigten und herkömmlichen Extrusionskopfs ein Vorformling in Form eines vorzugsweise mehrschichtigen schlauchförmigen Extrudats bereitgestellt werden. Der Extrusionskopf kann beispielsweise oberhalb eines nicht dargestellten Blasformwerkzeuges angeordnet sein, welches Blasformwerkzeug beispielsweise zwei Blasformhälften aufweisen kann, die in bekannter Art und Weise auf Formaufspannplatten eines Schließgestells angeordnet sind. Über die Formaufspannplatten können die Blasformhälften geöffnet und geschlossen werden. Die Blasformhälften umfassen jeweils wenigstens eine Kavität, die Kavitäten bilden bei dem geschlossenen Blasformwerkzeug ein Formnest, dessen Kontur der äußeren Gestalt des durch Extrusionsblasformen herzustellenden Behälters entspricht.

Der schlauchförmige Vorformling wird in Gewichtskraftrichtung entweder kontinuierlich oder diskontinuierlich aus dem Extrusionskopf ausgestoßen und zwischen die geöffneten Teile des Blasformwerkzeugs abgelängt, sodann schließt sich das Blasformwerkzeug um den schlauchförmigen Vorformling. Unter Anwendung von Unterdruck innerhalb des Formnestes und/oder unter Anwendung von Überdruck durch Einschließen einer Blasnadel in den Vorformling erfolgt sodann eine Aufweitung des Vorformlings im Formnest des Blasformwerkzeugs.

Das Verfahren gemäß der Erfindung sieht nun vor, in wenigstens eine Kavität wenigstens einer Blasformhälfte ein Einlegeteil 3 einzubringen, bevor der schlauchförmige Vorformling in das Blasformwerkzeug verbracht wird.

Figur 1 zeigt das Einlegeteil 3 in der Wand 1 des fertigen Behälters 2.

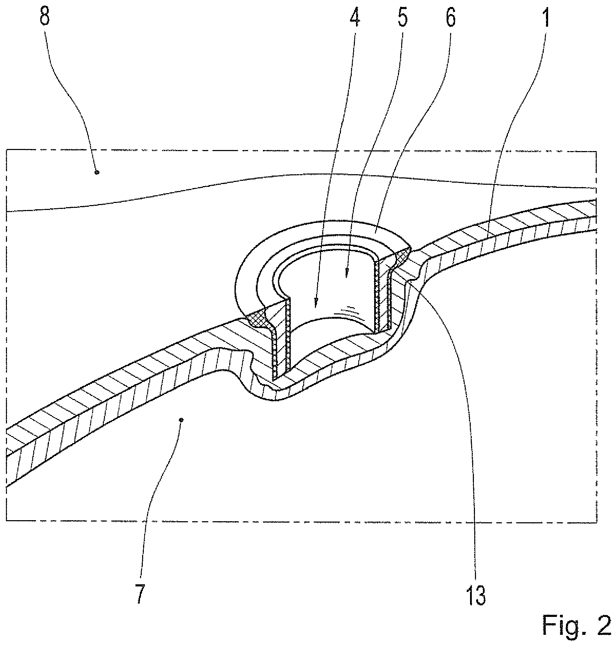

Die Wand 1 des Behälters 2 kann aus einem ein- oder mehrschichtigen thermoplastischen Kunststoff bestehen. Aus Vereinfachungsgründen ist in Figur 1 die Wand 1 des Behälters 2 einschichtig dargestellt, wohingegen in Figur 2 die Wand 1 des Behälters 2 mehrschichtig dargestellt ist. In Figur 2 umfasst die Wand 1 des Behälters zwei Schichten, dieser kann bis zu sechs verschiedene Schichten aufweisen, beispielsweise kann dieser als Co-Extrudat auf der Basis von HDPE mit einer Barriereschicht aus EVOH ausgebildet sein.

Das Einlegeteil 3 wird in eine entsprechend ausgebildete Vertiefung oder Aufnahme in einer Kavität des Blasformwerkzeugs bei Beginn eines Blaszyklus eingelegt, beispielsweise mittels eines Handhabungsroboters.

Anschließend oder währenddessen wird das schlauchförmige Extrudat bzw. der Vorformling zwischen die geöffneten Teile des Blasformwerkzeugs verbracht. Das Blasformwerkzeug schließt sich um den Vorformling, sodann wird der Vorformling innerhalb des von den Kavitäten gebildeten Formnestes aufgeweitet. Dabei legt sich der Vorformling gegen die formnestseitigen Teile des Einlegeteils an und verbindet sich mit diesem.

Das Einlegeteil 3 hat beispielsweise die in Figur 1 dargestellte Ausbildung mit einer zentralen und zylindrischen Durchführung 4 und einem umlaufend an eine Mündung 5 der Durchführung 4 angrenzenden Kragen 6. Der Kragen 6 ist in der in Figur 1 dargestellten Anordnung einer Behälterinnenseite 7 zugewandt und mit der Wand 1 des Behälters 2 großflächig verschweißt. Auf einer Behälteraußenseite 8 ist in die Durchführung 4 ein Anschlussstopfen 9 mit einem Leitungsanschluss 10 eingesetzt. Der Anschlussstopfen 9 kann innerhalb der Durchführung 4 verschweißt oder verklebt sein, bei dem in Figur 1 dargestellten Ausführungsbeispiels ist der Anschlusstopfen 9 lösbar in die Durchführung 4 eingesetzt und mittels O-Ringen 11 gegen eine innere Mantelfläche der Durchführung 4 abgedichtet.

Der Kragen 6 ist in Richtung auf die Behälteraußenseite 8 abgewinkelt und bildet mit einer Längsmittelachse der Durchführung 4 einen spitzen Winkel. Aufgrund dieser Ausgestaltung des Einlegeteils 3 ist das Einlegeteil 3 in den Behälter 2 eingesenkt bzw. bildet das Einlegeteil 3 mit der Wand 1 des Behälters 2 eine Mulde 12. Die Mulde 12 hat eine Tiefe, die in etwa der Tiefe bzw. Länge der Durchführung 4 entspricht, sodass die der Behälteraußenseite 8 zugewandte Mündung der Durchführung 4 in etwa mit der übrigen Fläche der Wand 1 des Behälters 2 fluchtet.

Wie vorstehend bereits erwähnt, kann das Einlegeteil 3 als spritzgegossenes 2-Komponenten-Bauteil ausgebildet sein, wobei beispielsweise das in Figur 2 dargestellte Einlegeteil 3 auf der der Wand 1 und der Behälterinnenseite 7 zugekehrten Fläche des Kragens 6 ein LDPE oder ein HDPE umfasst und im Übrigen der Körper des Einlegeteils 3 aus einem Polyamid oder einem anderen thermoplastischen Kunststoff bestehen kann.

Grundsätzlich kann das Einlegeteil 3 auch aus einem einzigen spritzgegossenen thermoplastischen Kunststoff bestehen, der andere Eigenschaften aufweist, als der thermoplastische Kunststoff des Behälters 2 bzw. der Wand 1 des Behälters 2.

In Figur 2 ist eine alternative Ausgestaltung des Behälters gemäß der Erfindung dargestellt, wobei bei dem in Figur 2 dargestellten Behälter die Durchführung 4 noch nicht geöffnet ist. Die Figur zeigt einen Schnitt durch die Wand des Behälters 2 unmittelbar nach Entnahme des Behälters 2 aus dem Blasformwerkzeug, wobei ebenso wie in Figur 1 mit dem Bezugszeichen 7 die Behälterinnenseite und mit dem Bezugszeichen 8 die Behälteraußenseite bezeichnet ist.

Das Einlegeteil 3 ist im Wesentlichen als Buchse ausgebildet, welche ebenfalls einen umlaufenden Kragen 6 aufweist, der die Mündung 5 der Durchführung 4 auf der Behälteraußenseite 8 umgibt. Der Kragen 6 fügt sich vollständig in die Behälteraußenseite 8 ein und fluchtet mit dieser.

Auf der Behälterinnenseite 7 ist das Einlegeteil 3 durch die Wand 1 des Behälters verschlossen.

Das Einlegeteil 3 hat ebenso eine zylindrische, innen glattwandige Durchführung 4, wobei die innere Mantelfläche der Durchführung 4 durch eine LDPE-Schicht gebildet ist und die äußere Mantelfläche des Einlegeteils 3, die mit der Wand 1 des Behälters 2 verschweißt ist, durch eine HDPE-Schicht gebildet ist. Das Einlegeteil 3 umfasst weiterhin einen Stützkörper 13, der beispielsweise aus Polyamid bestehen kann.

### Bezugszeichen

- 1: Wand
- 2: Behälter
- 3: Einlegeteil
- 4: Durchführung
- 5: Mündung
- 6: Kragen
- 7: Behälterinnenseite
- 8: Behälteraußenseite
- 9: Anschlussstopfen
- 10: Leitungsanschluss
- 11: O-Ringe
- 12: Mulde
- 13: Stützkörper

## Patentansprüche

1. Verfahren zum Extrusionsblasformen eines Behälters (2) aus thermoplastischem Kunststoff mit wenigstens einer Durchführung (4) durch eine Wand (1) des Behälters (2), folgende Verfahrensschritte umfassend:
- Bereitstellen eines Einlegeteils (3) aus einem thermoplastischen Kunststoff, welches eine Durchführung (4) aufweist,
- Einbringen eines Vorformlings aus thermoplastischem Kunststoff in ein Blasformwerkzeug mit einem Formnest, welches die Kontur des Behälters (2) definiert,
- Ausformen des Vorformlings innerhalb des Formnestes, wobei der Vorformling das Einlegeteil (3) formnestseitig umschließt und mit dem Einlegeteil (3) verschweißt wird,
- Herstellen einer Öffnung in der Wand (1) des Behälters (2) mittels eines Werkzeugs, welches von außen durch die Durchführung (4) des Einlegeteils (3) hindurchgeführt wird,
**dadurch gekennzeichnet,**
**dass** das Einlegeteil (3) einen ersten und einen zweiten thermoplastischen Kunststoff umfasst, wobei der erste thermoplastische Kunststoff mit dem thermoplastischen Kunststoff der Wand (1) des Behälters (2) im Sinne einer Verschweißbarkeit kompatibel ist.

2. Verfahren nach Anspruch 1, **dadurch gekennzeichnet, dass** der zweite thermoplastische Kunststoff des Einlegeteils (3) nicht mit der Wand (1) des Behälters (2) verschweißbar ist.

3. Verfahren nach einem der Ansprüche 1 oder 2, **dadurch gekennzeichnet, dass** die Öffnung in der Behälterwand (1) mittels eines heißen Dorns aufgeschmolzen wird.

4. Verfahren nach einem der Ansprüche 1 oder 2, **dadurch gekennzeichnet, dass** die Öffnung in der Wand (1) des Behälters (2) ausgefräst oder ausgekreist wird.

5. Verfahren nach einem der Ansprüche 1-4, **dadurch gekennzeichnet, dass** das Einlegeteil (3) als spritzgegossenes Mehr-Komponenten Bauteil ausgebildet ist

6. Verfahren nach einem der Ansprüche 1-5, **dadurch gekennzeichnet, dass** als Einlegeteil (3) eine Buchse mit einem umlaufenden Kragen (6) Anwendung findet, wobei der Kragen (6) eine Mündung (5) der Durchführung (4) umschließt.

7. Verfahren nach Anspruch 6, **dadurch gekennzeichnet, dass** der Kragen (6) eine Breite aufweist, die wenigstens der Tiefe der Durchführung (4) entspricht.

8. Verfahren nach Anspruch 7, **dadurch gekennzeichnet, dass** der Kragen (6) eine einer Behälterinnenseite (7) zugekehrte Mündung (5) der Durchführung (4) umschließt und in Richtung auf die Behälteraußenseite (8) abgewinkelt ist, sodass das Einlegeteil (3) in der Wand (1) des Behälters (2) auf der Behälteraußenseite (8) eine Mulde (12) bildet.

9. Extrusionsblasgeformter Behälter (2) aus thermoplastischem Kunststoff mit einer Durchführung (4) in einer Wand (1) des Behälters (2), wobei die Durchführung (4) durch einen Einlegeteil (3) gebildet ist, das von der Wand (1) des Behälters (2) teilweise umschlossen ist und mit dieser verschweißt ist, wobei das Einlegeteil (3) eine Durchführung (4) bildet und einen umlaufenden Kragen (6) aufweist **dadurch gekennzeichnet, dass** das Einlegeteil (3) einen ersten und einen zweiten thermoplastischen Kunststoff umfasst, wobei der erste thermoplastische Kunststoff mit der Wand (1) des Behälters (2) verschweißt ist.

10. Extrusionsblasgeformter Behälter (2) nach Anspruch 9, **dadurch gekennzeichnet, dass** der Kragen (6) eine einer Behälterinnenseite (7) der Durchführung (4) zugekehrte Mündung (5) umschließt und in Richtung auf eine Behälteraußenseite (8) abgewinkelt ist, sodass das Einlegeteil (3) auf der Behälteraußenseite (8) eine vorzugsweise trichterförmige Mulde (12) bildet.

11. Extrusionsblasgeformter Behälter (2) nach einem der Ansprüche 9 oder 10, **dadurch gekennzeichnet, dass** die Durchführung (4) durch eine eine glattwandige innere Mantelfläche begrenzt ist.

12. Extrusionsblasgeformter Behälter (2) nach einem der Ansprüche 9-11, **dadurch gekennzeichnet, dass** der Kragen (6) vollflächig mit der Wand (1) des Behälters (2) verschweißt ist und dass die Breite des Kragens (6) wenigstens so groß wie die Tiefe der Durchführung (4) ist.

13. Extrusionsblasgeformter Behälter (2) nach einem der Ansprüche 10-12, **dadurch gekennzeichnet, dass** die Tiefe der Mulde (12) wenigstens der Tiefe der Durchführung (4) entspricht.

14. Extrusionsblasgeformter Behälter (2) nach einem der Ansprüche 9-13, **dadurch gekennzeichnet, dass** die Durchführung (4) einen Anschlussstutzen, einen Nippel, ein Ventil oder ein Befestigungselement für ein Einbauteil des Behälters aufnimmt.

15. Extrusionsblasgeformter Behälter (2) nach einem der Ansprüche 9-14, hergestellt mit dem Verfahren gemäß einem der Ansprüche 1-8.

## Claims

1. A method for extrusion blow-molding a container (2) from a thermoplastics material, having at least one conduit (4) through a wall (1) of the container (2), said method comprising the following method steps:
- providing an insert part (3) from a thermoplastics material, said insert part (3) having a conduit (4);
- incorporating a preform from a thermoplastics material into a blow-molding tool having a mold cavity which defines the contour of the container (2);
- molding the preform within the mold cavity, wherein the preform on the mold cavity side encloses the insert part (3) and is welded to the insert part (3);
- producing an opening in the wall (1) of the container (2) by means of a tool which is guided from the outside through the conduit (4) of the insert part (3);
**characterized in that**
the insert part (3) comprises a first and a second thermoplastics material, wherein the first thermoplastics material in terms of weldability is compatible with the thermoplastics material of the wall (1) of the container (2).

2. The method as claimed in claim 1, **characterized in that** the second thermoplastics material of the insert part (3) is not weldable to the wall (1) of the container (2).

3. The method as claimed in either of claims 1 and 2, **characterized in that** the opening in the container wall (1) is created by melting by means of a hot mandrel.

4. The method as claimed in either of claims 1 and 2, **characterized in that** the opening in the wall (1) of the container (2) is milled or reamed.

5. The method as claimed in one of claims 1 to 4, **characterized in that** the insert part (3) is configured as an injection-molded multi-component part.

6. The method as claimed in one of claims 1 to 5, **characterized in that** a bush having an encircling collar (6) is used as the insert part (3), wherein the collar (6) encloses a port (5) of the conduit (4) .

7. The method as claimed in claim 6, **characterized in that** the collar (6) has a width which corresponds to at least the depth of the conduit (4).

8. The method as claimed in claim 7, **characterized in that** the collar (6) encloses a port (5) of the conduit (4) that faces the container internal side (7) and is angled in the direction toward the container external side (8) such that the insert part (3) forms a trough (12) on the container external side (8) in the wall (1) of the container (2) .

9. An extrusion blow-molded container (2) from a thermoplastics material, having a conduit (4) in a wall (1) of the container (2), wherein the conduit (4) is formed by an insert part (3) which is partially enclosed by the wall (1) of the container (2) and is welded so said wall (1), wherein the insert part (3) forms a conduit (4) and has an encircling collar (6), **characterized in that** the insert part (3) comprises a first and a second thermoplastics material, wherein the first thermoplastics material is welded to the wall (1) of the container (2).

10. The extrusion blow-molded container (2) as claimed in claim 9, **characterized in that** the collar (6) encloses a port (5) that faces a container internal side (7) of the conduit (4) and is angled in the direction toward a container external side (8) such that the insert part (3) forms a preferably funnel-shaped trough (12) on the container external side (8).

11. The extrusion blow-molded container (2) as claimed in either of claims 9 and 10, **characterized in that** the conduit (4) is delimited by a smooth-walled internal shell area.

12. The extrusion blow-molded container (2) as claimed in one of claims 9 to 11, **characterized in that** the collar (6) is welded to the wall (1) of the container (2) in a fully planar manner, and **in that** the width of the collar (6) is at least as large as the depth of the conduit (4).

13. The extrusion blow-molded container (2) as claimed in one of claims 10 to 12, **characterized in that** the depth of the trough (12) corresponds to at least the depth of the conduit (4).

14. The extrusion blow-molded container (2) as claimed in one of claims 9 to 13, **characterized in that** the conduit (4) receives a connector port, a nipple, a valve, or a fastening element for an installation part of the container.

15. The extrusion blow-molded container (2) as claimed in one of claims 9 to 14, produced by the method as claimed in one of claims 1 to 8.

## Revendications

1. Procédé de formage par extrusion-soufflage d'un récipient (2) en matière synthétique thermoplastique doté d'au moins une traversée (4) ménagée dans une paroi (1) du récipient (2), comprenant les étapes de procédé suivantes :
- mise à disposition d'une pièce d'insertion (3) en matière synthétique thermoplastique dotée d'une traversée (4) ;
- introduction d'une préforme en matière synthétique thermoplastique dans un outil de moulage par soufflage par soufflage doté d'une empreinte de moulage qui définit le contour du récipient (2) ;
- formage de la préforme dans la cavité de moulage, la préforme entourant la pièce d'insertion (3) du côté cavité de moulage et étant soudée avec la pièce d'insertion (3) ;
- création d'une ouverture dans la paroi (1) du récipient (2) au moyen d'un outil qui est introduit depuis l'extérieur par l'ouverture (4) de la pièce d'insertion (3),
**caractérisé en ce que**
la pièce d'insertion (3) comprend une première et une deuxième matière synthétique thermoplastique, la première étant compatible avec la matière synthétique thermoplastique de la paroi (1) du récipient (2) du point de vue de la soudabilité.

2. Procédé selon la revendication 1, **caractérisé en ce que** la deuxième matière synthétique thermoplastique de la pièce d'insertion (3) n'est pas soudable avec la paroi (1) du récipient (2).

3. Procédé selon l'une quelconque des revendications 1 et 2, **caractérisé en ce que** l'ouverture pratiquée dans la paroi (1) du récipient est mise en fusion par un mandrin chaud.

4. Procédé selon l'une quelconque des revendications 1 et 2, **caractérisé en ce que** l'ouverture dans la paroi (1) du récipient (2) est pratiquée par fraisage ou par enlèvement circulaire.

5. Procédé selon l'une quelconque des revendications 1 à 4, **caractérisé en ce que** la pièce d'insertion (3) est un élément réalisé par moulage par injection multimatière.

6. Procédé selon l'une quelconque des revendications 1 à 5, **caractérisé en ce qu'**une douille à collerette (6) périphérique est utilisée en tant que pièce d'insertion (3), la collerette (6) entourant un orifice (5) de la traversée (4).

7. Procédé selon la revendication 6, **caractérisé en ce que** la largeur de la collerette (6) est au moins égale à la profondeur de la traversée (4).

8. Procédé selon la revendication 7, **caractérisé en ce que** la collerette (6) entoure une embouchure (5) de la traversée (4) qui fait face au côté intérieur de récipient (7) et est pliée dans la direction du côté extérieur de récipient (8), de sorte que la pièce d'insertion (3) forme un creux (12) dans la paroi (1) du récipient (2) sur le côté extérieur de récipient (8).

9. Récipient (2) formé par extrusion-soufflage en matière synthétique thermoplastique, doté d'une traversée (4) ménagée dans une paroi (1) du récipient (2), la traversée (4) étant constituée par une pièce d'insertion (3) en partie entourée par la paroi (1) du récipient (2) et soudée à cette dernière, la pièce d'insertion (3) formant une traversée (4) et présentant une collerette (6) périphérique, **caractérisé en ce que** la pièce d'insertion (3) comprend une première et une deuxième matière synthétique thermoplastique, la première matière synthétique thermoplastique étant soudée avec la paroi (1) du récipient (2).

10. Récipient (2) formé par extrusion-soufflage selon la revendication 9, **caractérisé en ce que** la collerette (6) entoure une embouchure (5) de la traversée (4) qui fait face au côté intérieur de récipient (7) et est pliée dans la direction du côté extérieur de récipient (8), de sorte que la pièce d'insertion (3) forme un creux (12), de préférence en forme de trémie sur le côté extérieur de récipient (8).

11. Récipient (2) formé par extrusion-soufflage selon l'une quelconque des revendications 9 et 10, **caractérisé en ce que** la traversée (4) est délimitée par une surface latérale intérieure à paroi lisse.

12. Récipient (2) formé par extrusion-soufflage selon l'une quelconque des revendications 9 à 11, **caractérisé en ce que** la collerette (6) est soudée sur toute sa surface à la paroi (1) du récipient (2) et **en ce que** la largeur de la collerette (6) est au moins égale à la profondeur de la traversée (4).

13. Récipient (2) formé par extrusion-soufflage selon l'une quelconque des revendications 10 à 12, **caractérisé en ce que** la profondeur du creux (12) est au moins égale à la profondeur de la traversée (4).

14. Récipient (2) formé par extrusion-soufflage selon l'une quelconque des revendications 9 à 13, **caractérisé en ce que** la traversée (4) s'assemble avec une tubulure de raccordement, un raccord fileté, une vanne ou un élément de fixation destinés à une pièce incorporée du récipient.

15. Récipient (2) formé par extrusion-soufflage selon l'une quelconque des revendications 9 à 14, fabriqué par le procédé selon l'une quelconque des revendications 1 à 8.
